# EUROPEAN PATENT SPECIFICATION

(11) **EP 1 479 302 B1**
(45) Date of publication and mention of the grant of the patent: **06.04.2016**
(21) Application number: 04425267.4
(22) Date of filing: 13.04.2004
(51) Int. Cl.: A23N 1/02

(54) **Cylindrical crushing chamber for machines used to crush olives and similar oleaginous fruits**
Zylindrische Kammer zum Pressen von Oliven verwendet in Olivenpressen und Maschinen zum Pressen von ähnlichen Ölfrüchten
Chambre de pressoir cylindrique pour des machines d'extraction d'olives et de fruits oligeux similaires

(30) Priority: 18.04.2003 IT PS20030013
(43) Date of publication of application: 24.11.2004
(73) Proprietor: PIERALISI MAIP SOCIETA' PER AZIONI, 60035 Jesi (AN) (IT)
(72) Inventor: Pieralisi, Gennaro, 60035 Jesi (AN) (IT)
(74) Representative: Baldi, Claudio

(56) References cited:
- EP-A- 0 499 154
- FR-A- 2 573 343
- IT-B- 1 227 743
- US-A- 3 398 676
- US-A- 4 095 517

## Description

The present patent application refers to a cylindrical crushing chamber for installation on machines used to crush olives and similar oleaginous fruits.

As it is known, olive crushing is the first phase in the olive oil production process. In particular, this phase consists in crushing the pulp and stones of olives to obtain olive paste and is followed by the kneading phase.

The Applicant of this patent application has been operating in the production of oil machines for many years and is the holder of the patent for industrial invention no. IT 1227743 that refers to an olive crushing machine.

The machine devised in the aforementioned patent has a crushing chamber with basically cylindrical structure, capable of rotating around the horizontal axis.

The cylindrical chamber is composed of two opposite circular flanges with a perimeter grid wall in intermediate position.

According to traditional technology, olives are fed by an auger into a cylindrical chamber and crushed by rotating radial means - defined as "hammers" - that move with different rotation speed compared to the chamber.

The dimensions of the crushing hammers are such that the tools can brush the internal side of the grid wall of the crushing chamber during rotation.

Due to centrifugal force, the olives fed into the rotating chamber translate towards the internal side of the perimeter wall of the cylindrical chamber, where they are intercepted by the hammers and powerfully crushed against the internal side of the perimeter grid wall.

The forced interference between the olives and circular holes of the perimeter grid wall of the crushing chamber is produced during this phase, and the circular edge of the holes acts as a blade capable of crushing the pulp and stone of the olives that come in contact with it.

Another effect of the relative rotation between the crushing chamber and the internal hammers consists in the fact that, after being chopped up, olive paste can be expelled in radial direction through the circular holes of the perimeter wall and taken to the next phase of the production process.

As a matter of fact, the Applicant of this patent application disclosed an improvement of the aforementioned technology with the patent application no. MI2001A00802 dated 12.04.2004 to protect an improved crushing machine provided with two separate crushing chambers, with the chamber having lower diameter rotating inside the chamber with higher diameter.

According to the aforementioned improved machine, olives are first fed into the internal chamber where they undergo the first crushing phase, and then taken as olive paste to the second crushing phase in the external chamber.

In the second chamber the olive paste undergoes additional crushing with the same characteristics as the first crushing chamber. Then, the olive paste in the desired granulometry is expelled in radial direction from the holes of the perimeter wall of the second crushing chamber and taken to the next phases of the production process.

Although characterised by a general satisfactory level of operation, the crushing machine claimed in the Applicant's aforementioned patent has proved to be perfectible, with special reference to the structure of the cylindrical chambers.

A series of careful experimental checks has shown some technical-functional drawbacks connected to the grid structure with circular-structured holes of the perimeter walls of the crushing chamber.

The perimeter walls are so far provided with a series of holes along circumferences in parallel staggered position, so that the complete series of holes has a rhomboidal mesh layout.

The rhomboidal layout of the circular holes on the grid perimeter walls is the cause of the first drawback, because of the difficult expulsion in radial direction of the olive paste from the perimeter walls of the two concentric crushing chambers.

In particular, it has been shown that deposits of olive paste (in practical terms perimeter "paths") are formed in the areas with continuous surface between two perimeter parallel series of circular holes.

These are deposits of olive paste that cannot immediately enter the passage section of one of the many circular holes on the grid perimeter wall.

The formation and persistence of olive paste "paths" in the crushing chambers are a negative factor, at least for the two following reasons: first of all, they create resistance to the rotation of hammers, thus requiring higher power of the engines used to move the rotating parts, with consequent higher energy consumption.

Secondly, the olive paste "held" inside the crushing chamber undergoes the energetic interference of rotary hammers for too long, thus receiving excessive stress that causes overheating and excessive structural mistreatment.

These are of course undesired effects for the good quality of the oil that is obtained in the next phases of the production process.

However, the mistreatment and overheating of olive paste is also caused by the circular profile of the holes on the perimeter walls of the crushing chamber.

It has been shown that the olives that are centrifuged by the rotary hammers against the perimeter grid wall of the crushing chamber are only crushed by one semi-circular section of each hole.

Although it is true that, during the relative rotation between the crushing chamber and the hammers, each hammer brushes the entire cross-section of each hole of the perimeter wall of the chamber at every rotation, it is also true that each hole of the perimeter wall has an attack border and an exit border.

It appears evident that in each hole of the perimeter wall the section used to crush the olives is the exit border with respect to the rotation of the hammers.

Each hole has a sharp section with reduced length, which does not correspond to especially rapid or efficacious crushing. This means that the mass of olives can be efficaciously chopped up until it passes through the circular holes on the grid wall of the crushing chamber only after repeatedly undergoing the forced interference between the rotary hammers and the internal side of the grid wall.

The continuous repeated interference produces overheating and excessive mistreatment of the mass of olives being crushed.

On the other hand, the fact that olives are "cut" always in the same section in each hole of the perimeter walls of the cylindrical chambers causes the irregular wear of the border of the hole, with consequent loss of cutting power.

It appears evident that when the loss of cutting power affects the complete series of holes of the perimeter wall, it is necessary to replace the entire wall with a new wall, with evident difficulties and costs.

Another critical aspect of traditional cylindrical crushing chambers with perimeter walls is related to the complex and expensive operation needed to realise the circular holes that ensure the good operation of the crushing machine.

It has been shown that the circular holes can expel the olive paste obtained in the crushing chamber as long as they are provided with countersunk profile with diverging direction from inside outwards, so that the inlet hole for the olive paste is narrower than the outlet hole.

This is the only possible way to avoid the risk for the holes to be clogged up by coarser pieces of olive paste. Obviously, if large pieces of olive paste penetrate the narrower inlet cross-section of the hole, they can be expelled from the larger outlet cross-section of the hole, also in view of the force created by the additional quantity of olive paste conveyed in the same hole thanks to the action of the rotary hammers.

FR2573343 **discloses a centrifugal press comprising a drum driven in rotation. The cylindrical part of the drum consists of a series of bars elongate in the longitudinal direction of the drum, of triangular cross-section, placed with their bases facing the interior of the drum.**

The purpose of the invention is to improve the prior technique in order to overcome the aforementioned drawbacks with a solution characterised by excellent technical-functional efficacy combined with simple construction and cost-convenient realisation.

The inventive idea for the realisation of the invention is to modify the realisation modes of the perimeter walls of the cylindrical crushing chambers of traditional olive crushing machines.

According to the invention, the cylindrical chambers of crushing machines are not enclosed by a continuous perimeter wall with numerous circular-cross section holes. They are enclosed by a regular parallel series of identical transversal bars mounted edgeways in intermediate position between the two circular flanges of the cylindrical chamber.

The bars have a transversal cross-section with polygonal profile with more than three sides, preferably rectangular or square.

Thanks to the adoption of the perimeter series of bars, the new crushing chamber of the invention has a structure similar to a cage.

The adoption of the series of bars gives the cylindrical crushing chamber a series of significant advantages.

First of all, the presence of a passage section between two bars that covers the entire width of the crushing chamber ensures the constant optimal expulsion of the olive paste from the chamber as soon as it has achieved the appropriate granulometry.

The realisation of the transversal passage cross-sections along the perimeter of the crushing chamber prevents portions of olive paste from depositing inside the crushing chamber, thus repeatedly undergoing the stressing interference of the rotary hammers.

In comparison to traditional walls with circular holes, the perimeter series of transversal bars in co-operation with the rotary hammers ensures higher efficacy and higher speed of olive crushing, thanks to the presence of a larger sharp surface.

While in traditional walls olive are only crushed in a short portion of each hole with circular cross-section, in the chamber of the invention olives are crushed on the entire longitudinal border of each bar, that is to say along a section that transversally extends for the entire distance between the two flanges of the crushing chamber.

It is obvious that the more rapid and more efficient crushing of olives allows olive paste to achieve the desired granulometry in a shorter time, thus enabling spontaneous expulsion from the crushing chamber.

In practical terms, the shorter permanence of the olive past inside each crushing chamber reduces the mistreatment and overheating of the paste compared to crushing chambers with traditional perimeter walls.

Moreover, the easier and faster expulsion of olive paste results in energy saving, since the machine provided with the crushing chamber of the invention consumes less energy with the same granulometry and capacity, with respect to a crushing machine with traditional crushing chambers.

The easy expulsion of olive paste is additionally favoured by the position of the perimeter bars in the crushing chamber of the invention.

Since the bars are mounted side by side in radial position and provided with constant thickness, it appears evident that the passage cross-section between two bars has a countersunk direction, diverging from the inside to the outside of the crushing chamber, thus favouring the expulsion of crushed olive paste.

This causes an effect similar to the effect obtained in traditional crushing chambers because of the countersunk configuration of the holes of the perimeter walls; however, the advantage is that the expensive operations necessary to obtain the aforementioned countersunk holes are no longer needed.

Another advantage of the invention is represented by the fact that, when the crushing power of each cylindrical chamber is reduced, it is no longer necessary to replace the entire perimeter wall, as in the prior technique. As a matter of fact, only the bars that have lost their cutting power due to wear must be replaced.

Since the sharp profile of each bar is represented by one of the four sharp corners (in particular the corner facing the inside and the centre of the crushing chamber), it appears evident that the four sharp profiles of the four sharp corners of the bar can be used alternatively before replacing the bar.

As soon as the sharp profile of the bar wears out, the bar can be disassembled from is operating position between the two flanges and mounted in a different position, so that the task of crushing olives is entrusted to a sharp corner.

Therefore, the operating life of the bar finishes after four different operating cycles that correspond to the life in full efficiency condition of each sharp corner.

Finally, it must be noted that the new crushing chamber of the invention can be advantageously used in machines provided with a single crushing chamber and also in modern machines with two cooperating concentric crushing chambers.

For major clarity the description of the invention continues with reference to the enclosed drawings, which are intended for purposes of illustration only and not in a limiting sense, whereby:

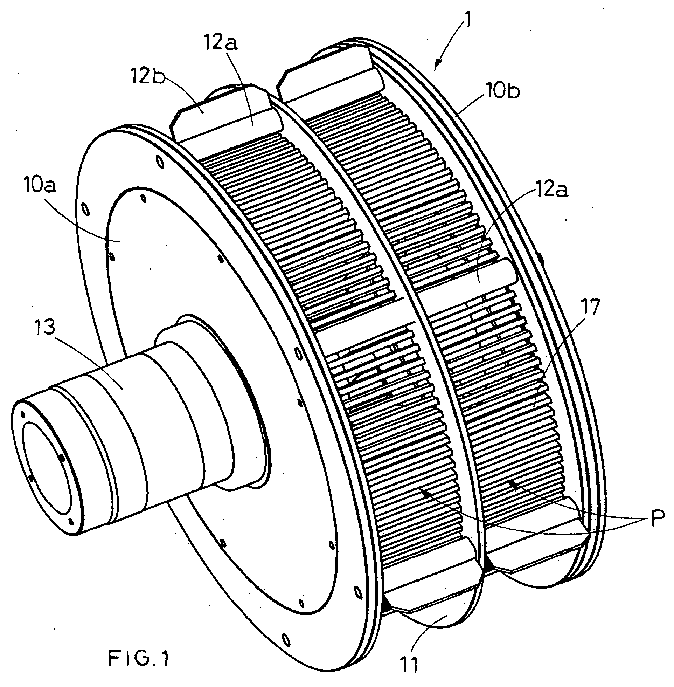

- Fig. 1 is an axonometric side view of the cylindrical chamber with hub for connection to the driving shaft.
- Fig. 2 is the same as Fig. 1, showing the side with the opening of the auger that feeds olives into the chamber;
- Fig. 3 is the cross-section of the chamber of the invention with a diameter axial plane.

With reference to the aforementioned figures, the crushing chamber (1) of the invention is composed of an opposite pair of circular flanges (10a, 10b) with an annular partition (11) in intermediate position; it being provided that the three parts (10a, 10b, 11) are mutually and permanently connected by means of transversal tie-rods located at regular intervals on the perimeter border of the chamber (1).

As shown in the enclosed figures, sleeves (12a) are inserted into the transversal tie-rods to maintain the central partition (11) in correct parallel position with respect to the two flanges (10a, 10b).

One flange (10a) is coupled on the hub (13) of a motorised shaft in which a second motorised shaft is inserted with possibility of relative rotation, joined with the hub (15a) of a circular plate (15) located on the inside of the flange (10) and designed to support a series of hammers (16).

A regularly spaced series of radial bars (17) is fixed between the two flanges (10a, 10b) to define a perimeter wall (P), with transversal cross-section having a polygonal profile with more than three sides, preferably rectangular or square.

In particular, the two ends of each bar (17) are contained in suitable housings on the inside of the flanges (10a, 10b) and the central section is contained in a suitable notch located on the central annular partition (11).

It must be noted that some of the sleeves (12a) inserted on the tie-rods (12) are provided with spatulas (12b) to facilitate the expulsion of olive paste from the manifold where the crushing chamber (1) is located.

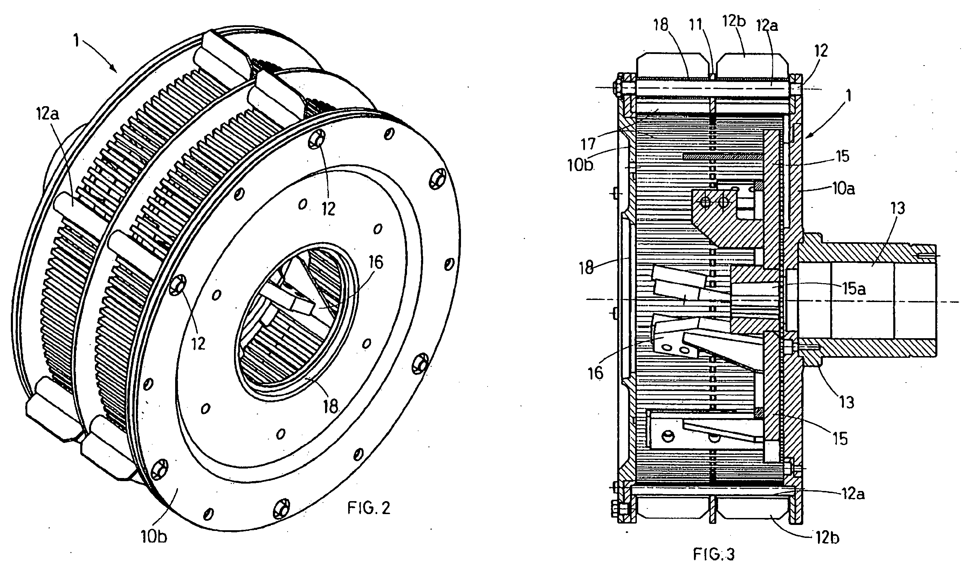

Finally, Fig. 2 shows the hole (18) on the flange (10b) used to insert the auger used to feed olives inside the crushing chamber (1).

## Claims

1. Cylindrical chamber for crushing machines, of the type composed of an opposite pair of circular flanges (10a, 10b) and a grid perimeter wall (P) through which the product is expelled after being smashed by a series of hammers (16) that brush the internal surface of said perimeter wall and are supported by a circular plate (15) housed into said cylindrical chamber (1), where said plate (15) rotates, the chamber (1) being dragged into rotation by a corresponding shaft and being **characterised by** the fact that the grid perimeter wall (P) is obtained by means of a regularly spaced series of bars (17), each bar having a polygonal cross-section with more than three sides wherein the sharp profile of each bar is represented by one of the sharp corners and each bar transversally extending between the two flanges (10a, 10b) with parallel direction to the rotation axis of the chamber (1).

2. Cylindrical chamber for crushing machines as defined in claim 1, **characterised by** the fact that the grid perimeter wall (P) is reinforced with one or more central annular partitions (11).

3. Cylindrical chamber for crushing machines as defined in claim 1 or 2, **characterised by** the fact that each bar (17) has a polygonal cross-section with rectangular or square profile, and by the fact that the longitudinal symmetric axis lies on a radial plane passing through the rotation axis of the chamber (1).

4. Cylindrical chamber for crushing machines as defined in one or more of the preceding claims, **characterised by** the fact that the ends of the bars (17) are contained in corresponding housings located on the inside of the flanges (10a, 10b), which are tightened by means of a perimeter series of tie-rods (12) located along an external circumference of the grid perimeter wall (P).

5. Cylindrical chamber for crushing machines as defined claim 4, **characterised by** the fact that sleeves (12a) are located on the outside of the tie-rods (12) to maintain the correct mutual position between the intermediate partition (11) and the two flanges (10a, 10b).

6. Cylindrical chamber for crushing machines as defined in claim 5, **characterised by** the fact some of the sleeves (12a) are provided with spatulas (12b).

## Patentansprüche

1. Zylindrische Kammer für Zerkleinerungsmaschinen des Typs, der aus einem Paar von gegenüberliegenden kreisförmigen Flanschen (10a, 10b) und einer umlaufenden Gitterwand (P) besteht, durch die das Produkt ausgestoßen wird, nachdem es durch eine Reihe von Hämmern (16) zerquetscht wurde, die die Innenfläche der umlaufenden Wand abschaben und von einer kreisförmigen Platte (15) getragen werden, die in der zylindrischen Kammer (1) untergebracht ist, in der sich die kreisförmige Platte (15) dreht, wobei die Kammer (1) von einer dazugehörigen Welle in Drehung versetzt wird, **dadurch gekennzeichnet, dass** die umlaufende Gitterwand (P) mittels einer Reihe von regelmäßig beabstandeten Stäben (17) erhalten wird, die jeweils einen vieleckigen Querschnitt mit mehr als drei Seiten aufweisen, wobei das scharfe Profil eines jeden Stabs durch eine der scharfen Ecken dargestellt wird und jede Stangen sich quer zwischen den beiden Flanschen (10a, 10b) in einer parallel zur Drehachse der Kammer (1) liegenden Richtung erstreckt.

2. Zylindrische Kammer für Zerkleinerungsmaschinen nach Anspruch 1, **dadurch gekennzeichnet, dass** die umlaufende Gitterwand (P) durch eine oder mehrere ringförmige, mittlere Zwischenwände (11) versteift wird.

3. Zylindrische Kammer für Zerkleinerungsmaschinen nach Anspruch 1 oder 2, **dadurch gekennzeichnet, dass** jeder Stab (17) einen vieleckigen Querschnitt mit einem rechteckigen oder quadratischen Profil aufweist, sowie dadurch, dass ihre Längssymmetrieachse auf einer radialen Ebene angeordnet ist, die durch die Drehachse der Kammer (1) hindurchgeht.

4. Zylindrische Kammer für Zerkleinerungsmaschinen nach einem oder mehreren der vorstehenden Ansprüche, **dadurch gekennzeichnet, dass** die Enden der Stäbe (17) in jeweiligen Sitzen untergebracht sind, die im Inneren der Flansche (10a, 10b) vorgesehen sind, welche mittels einer Reihe von umlaufenden Zugstangen (12) angezogen werden, die längs eines äußeren Umfangs der umlaufenden Gitterwand (P)angeordnet sind.

5. Zylindrische Kammer für Zerkleinerungsmaschinen nach Anspruch 4, **dadurch gekennzeichnet, dass** auf der Außenseite der Zugstangen (12) jeweiligen Muffen (12a) vorgesehen sind, die in der Lage sind, eine korrekte gegenbezügliche Stellung zwischen der Zwischenwand (11) und den beiden Flanschen (10a, 10b) sicherzustellen.

6. Zylindrische Kammer für Zerkleinerungsmaschinen nach Anspruch 5, **dadurch gekennzeichnet, dass** die Muffen jeweils (12a) mit Spateln (12b) versehen sind.

## Revendications

1. Chambre cylindrique pour machines à broyer, du type constituée d'une paire opposée de brides circulaires (10a, 10b) et d'une paroi de périmètre (P) grillagée à travers laquelle le produit est expulsé après avoir été écrasé par une série de marteaux (16) qui raclent la surface intérieure de ladite paroi de périmètre et sont supportés par une plaque circulaire (15) logée dans ladite chambre cylindrique (1), où ladite plaque (15) tourne, la chambre (1) étant mise en rotation par un respectif arbre et étant **caractérisée en ce que** ladite paroi de périmètre grillagée (P) est réalisée moyennant une série de barres (17) régulièrement espacées, chaque barre ayant une section transversale polygonale avec plus de trois côtés, où le profil coupant de chaque barre est représenté par l'un des angles aiguisés et chaque barre se déploie transversalement entre les deux dites brides (10a, 10b) en direction parallèle à l'axe de rotation de la chambre (1).

2. Chambre cylindrique pour machines à broyer, selon la revendication 1, **caractérisée en ce que** ladite paroi de périmètre grillagée (P) est renforcée par une ou plusieurs cloisons annulaires médianes (11).

3. Chambre cylindrique pour machines à broyer, selon la revendication 1 ou 2, **caractérisée en ce que** chaque barre (17) présente une section polygonale à profil rectangulaire ou carré, et **en ce que** son axe de symétrie longitudinale est disposé sur un plan radial, passant par l'axe de rotation de la chambre (1).

4. Chambre cylindrique pour machines à broyer, selon l'une ou plusieurs des revendications précédentes, **caractérisée en ce que** les extrémités des dites barres (17) résultent logées dans des logements respectifs prévus à l'intérieur des dites brides (10a, 10b), lesquelles résultent serrées au moyen d'une série de tirants sur le périmètre (12) positionnés le long d'une circonférence placée à l'extérieur de ladite paroi de périmètre grillagée (P).

5. Chambre cylindrique pour machines à broyer, selon la revendication 4, **caractérisée en ce qu'**elle adopte, sur l'extérieur des dits tirants (12), des respectifs manchons (12a) en mesure d'assurer la correcte assiette réciproque entre la cloison intermède (11) et les deux brides (10a, 10b).

6. Chambre cylindrique pour machines à broyer, selon la revendication 5, **caractérisée en ce que** certains des dits manchons (12a) incorporent des respectives palettes (12b).
